(19) Europäisches Patentamt
European Patent Office
Office européen des brevets

(11) **EP 2 403 673 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**08.12.2021   Patentblatt 2021/49**

(45) Hinweis auf die Patenterteilung:
**19.06.2013   Patentblatt 2013/25**

(21) Anmeldenummer: **10713554.3**

(22) Anmeldetag: **08.03.2010**

(51) Int Cl.:
**B23C 5/00** *(2006.01)*          **B23C 5/10** *(2006.01)*

(86) Internationale Anmeldenummer:
**PCT/DE2010/000249**

(87) Internationale Veröffentlichungsnummer:
**WO 2010/102605 (16.09.2010 Gazette 2010/37)**

(54) **Schaftfräser**

End mill cutter

Fraise à queue

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **07.03.2009   DE 102009012012**
**29.04.2009   DE 102009002738**

(43) Veröffentlichungstag der Anmeldung:
**11.01.2012   Patentblatt 2012/02**

(73) Patentinhaber: **Gühring KG**
**72458 Albstadt (DE)**

(72) Erfinder: **STRASMANN, Martin**
**42859 Remscheid (DE)**

(74) Vertreter: **Winter, Brandl - Partnerschaft mbB**
**Alois-Steinecker-Straße 22**
**85354 Freising (DE)**

(56) Entgegenhaltungen:
| | |
|---|---|
| **EP-A1- 0 062 693** | **EP-A1- 1 894 655** |
| **WO-A1-2009/122937** | **WO-A2-2008/018062** |
| **DE-A1- 3 706 282** | **DE-A1-102008 018 399** |
| **DE-U1- 29 715 192** | **DE-U1-202006 016 531** |
| **FR-A1- 2 875 722** | **US-A- 4 285 618** |
| **US-A- 4 770 567** | **US-B1- 7 367 754** |
| **US-B2- 7 001 113** | |

- **Produktkatalog 2009, Fa. Dormer**
- **Produktkatalog 03/2007, Fa. Rübig**
- **Informationsblatt der Fa. Hommel Hercules zu Fräsertypen, DIN 1836, Januar 1984**

**EP 2 403 673 B2**

**Beschreibung**

Die Erfindung betrifft einen Schaftfräser gemäß dem Oberbegriff des Patentanspruchs 1. Beispielsweise ist ein solcher Schaftfräser aus US 4 770 567 bekannt.

Derartige Fräser haben als gemeinsames Merkmal einen Schaft als Einspannteil, der in die Werkzeugaufnahme eingesetzt ist. Solche Fräser sind beispielsweise als Langlochfräser oder Gesenkfräser mit flacher oder runder Stirn im Einsatz. Solche Fräser zeichnen sich ferner dadurch aus, dass sie im Bereich ihres Schneidabschnitts an den durch Spannuten voneinander getrennten Fräserstegen eine Mehrzahl von wendelförmig verlaufenden Umfangsschneidkanten haben, die jeweils mit einem Schruppprofil in der Weise ausgestaltet sind, dass die Umfangsschneidkanten Spanteilernuten erhalten, wobei die Spanteilernuten von in Umfangsrichtung benachbarten Fräserstegen axial zueinander versetzt sind.

Derartige Schruppprofile sind beispielsweise in der DIN 1836 in den Ausführungen "rund" und "flach" genormt, wobei bezüglich der Struktur des Profils, ggfs. bezüglich der Steigung, mit der die Spanteilernuten in die Fräserstege eingebracht werden, zwischen "extra-grob", "grob" und "fein" unterschieden wird. Die Profilstruktur, wie z.B. auch diese Steigungen der die Spanteilernuten ausbildenden Ausnehmungen, sind werkstoffabhängig, wobei mit zunehmender Härte des zu zerspanenden Werkstoffs die Steigung feiner gewählt wird. Die Steigung kann darüber hinaus vom Werkzeugdurchmesser abhängig sein, wobei in diesem Fall gilt, dass die Steigung umso feiner ist, je kleiner der Durchmesser des Schaftfräsers ist.

Im Gegensatz zu Schlichtfräsern, die üblicherweise keine Profilierung der Schneide oder der Spanfläche besitzen, ermöglicht das unterbrochene, d.h. profilierte Profil der Werkzeugschneide der Schruppfräser ein schnelleres Brechen des Spans. Der Schruppfräser ist aber in der Regel nicht für die Herstellung einer gleichmäßigen Oberfläche mit hoher Oberflächengüte geeignet. Aufgrund des kurzspanenden Verhaltens des abgetragenen Materials ergibt sich jedoch eine wesentlich bessere Spanabfuhr als beim Schlichtfräser. Aufgrund des hohen Zeitspanungsvolumens eignen sich Schruppfräswerkzeuge der eingangs beschriebenen Art auch hervorragend für Arbeitsgänge, bei denen es gilt, bis auf ein Schlichtmaß von beispielsweise 0,5 mm möglichst effektiv und schnell Material vor einem Arbeitsgang mit einem Schlichtfräswerkzeug abzunehmen. Im Übrigen sind der Schnittdruck und die Leistungsaufnahme der Maschine beim Arbeiten mit solchen Schruppfräsern geringer, und das Werkzeug kann eine hohe Schnitttiefe und Schnittbreite fahren.

Auf der anderen Seite sind Schlichtfräser, also Schaftfräser mit glatten Schneiden, zwar in der Lage, eine Werkstückoberfläche mit hoher Maßhaltigkeit und Güte, d.h. Glattheit herzustellen, was sich aufgrund der Regelmäßigkeit der Werkzeugschneide, der hohen Drehzahl bei gleichzeitig niedriger Vorschubgeschwindigkeit des Fräswerkzeugs sowie des in der Regel geringen Spanvolumens aufgrund des geringen Schlichtaufmaßes ergibt, das je nach Anwendungsgebiet zwischen 0,1 und 1,0 mm liegen kann. Wenn derartige Schlichtfräser jedoch mit größeren Zustelltiefen bzw. Zustellbreiten eingesetzt werden, treten aufgrund der längeren und größeren Späne zum einen Spanabfuhrprobleme auf, und zum anderen erhöht sich die Leistungsaufnahme und der Schnittdruck überproportional. Um die dadurch einhergehende Neigung zu Schwingungen zu verringern, hat man - wie beispielsweise im Dokument DE 37 06 282 C2 beschrieben - die Schneidengeometrie geändert, indem man im Bereich der Umfangsschneidkanten, d.h. der Fräser-Hauptschneiden, mit mindestens zwei ungleichen Drallwinkeln gearbeitet hat.

Durch diese unterschiedlichen Drallwinkel können Vibrationen des Fräswerkzeugs minimiert werden, was zu einer Erhöhung der Standzeit bzw. im Umkehrschluss zu einer Erhöhung der Vorschubwerte genutzt werden kann. Aufgrund der nach wie vor verhältnismäßig hohen Leistungsaufnahme und des hohen Schnittdrucks ebenso wie der kritischen Spanabfuhr kann auch dieser bekannte Schlichtfräser nur mit verhältnismäßig kleinen Schnittbreiten gefahren werden.

Der Erfindung liegt deshalb die Aufgabe zugrunde, einen Schaftfräser der eingangs beschriebenen Art, insbesondere gemäß dem Oberbegriff des Patentanspruchs 1 in der Weise weiterzubilden, dass er sich bei Sicherstellung hoher Standwege, bei geringer Leistungsaufnahme der Maschine und bei reduziertem Schnittdruck in besonderer Weise dafür eignet, ein hohes Zeitspanungsvolumen bereitzustellen und gleichzeitig das Werkstück mit guter Oberflächenqualität zu bearbeiten.

Diese Aufgabe wird durch die Merkmale des Patentanspruchs 1 gelöst.

Erfindungsgemäß wird die aus dem Bereich der Schlichtfräser bekannte Maßnahme der Variation des Drallwinkels der in Umfangsabstand zueinander stehenden Umfangsschneidkanten in vorteilhafter Weise mit einer neuen Geometrie der Spanteilernuten kombiniert, wodurch sich ein Fräswerkzeug ergibt, das hinsichtlich der Spanbildung, der Leistungsaufnahme der Maschine, des Schnittdrucks, der Spanabfuhr, der erzielbaren Schnittbreite und der Oberflächenqualität ausschließlich die Vorteile der herkömmlichen Schrupp- und Schlichtfräser kombiniert.

Der erfindungsgemäße Schaftfräser erzeugt nach wie vor kurze Späne und hat dadurch eine geringe Leistungsaufnahme. Ferner ist der Schnittdruck gering und aufgrund der kurzen Späne ergibt sich eine gute Spanabfuhr. Aufgrund des abgeflachten Schruppprofils in Verbindung mit der Maßnahme, dass zumindest zwei Umfangsschneidkanten unterschiedliche Drallwinkel aufweisen, wird die durch das Schruppprofil normalerweise vorgeprägte Schwingungsneigung des Fräsers erheblich reduziert, so dass über die vorzugsweise im Wesentlichen abgeflachten Bereiche des Schruppprofils bzw. mit einem Schruppschlichtprofil nach DIN 1836 qualitativ sehr hochwertige Oberflächen mit gutem Standweg herstellbar sind, da die Abrundungen der Spanteilernuten im Übergang zum vorzugsweise im Wesentlichen abgeflachten Abschnitt des Schruppprofils wirksam dafür sorgen, dass über die Standzeit des Werkzeugs ein weicher Schnitt bei minimierter Schlagbeanspruchung der Umfangsschneidkante sichergestellt ist. Das erfindungsgemäße Fräswerkzeug eignet sich auf diese Weise in besonderer Weise zum Arbeiten mit hohen Schnittbreiten und - tiefen, beispielsweise beim Nutenfräsen, wobei die Spanform ähnlich günstig wie beim reinen Schruppfräsen bleibt.

Der Wert der Drallwinkelunterschiede im Bereich zwischen 1 und 6° wird in Abhängigkeit vom zu zerspanenden Werkstoff und/oder vom Werkstoff des Schaftfräsers und/oder von dessen Beschichtung gewählt.

Vorteilhafte Weiterbildungen der Erfindung sind Gegenstand der Unteransprüche.

Versuche haben gezeigt, dass es von Vorteil ist, den Flankenradius, über den die Spanteilernut in den abgeflachten Abschnitt des Schruppprofils übergeht, in dem Bereich zwischen 0,1 und 1,0 mm, besonders bevorzugst zwischen 0,1 und 0,5 mm zu legen, um die geforderten Standzeiten bei vorgegebener Oberflächenqualität einzuhalten.

Für die Herstellung der Spanteilernuten kommen verschiedene Herstellungsmethoden in Betracht. Es ist beispielsweise möglich, die Spanteilernuten mittels einer Profilschleifscheibe in die Umfangsschneidkanten einzuschleifen. Gemäß einer Ausführungsform sind die Spanteilernuten zu einer auf einer Längsachse des Schaftfräsers senkrecht stehenden Ebene des Schaftfräsers angestellt, wodurch es gelingt, auf die Spanbildung in vorteilhafter Weise Einfluss zu nehmen. In diesem Fall können die Spanteilernuten jeweils abschnittsweise dem Verlauf einer Wendel folgen, deren Ganghöhe beispielsweise der Teilung des Schruppprofils oder einem ganzzahligen Vielfachen der Teilung entspricht.

Es ist jedoch auch gleichermaßen möglich, die Spanteilernuten parallel zu einer auf einer Längsachse des Schaftfräsers senkrecht stehenden Ebene des Schaftfräsers auszubilden.

Gemäß einer weiteren vorteilhaften Ausgestaltung ist der dem Fräserschaft jeweils zugewandte Flankenradius in der Spanteilernut kleiner als der andere Flankenradius, insbesondere für den Fall, dass der dem Fräserschaft zugewandte Flankenradius an der Spanbildung zuerst teilnimmt. Mit dieser Maßnahme kann die Standzeit des Schaftfräsers weiter erhöht werden, wobei gleichzeitig die Schwingungsneigung abnimmt und die Qualität der damit herstellbaren Oberfläche verbessert werden kann.

Über die Wahl des Materials des Schaftfräsers lässt sich die Zerspanungsleistung, die Oberflächenqualität und die Standzeit des Werkzeugs weiter optimieren. Es hat sich herausgestellt, dass die erfindungsgemäße Gestaltung ihre besonderen Vorteile dann entfaltet, wenn das Werkzeug insgesamt oder zumindest im Bereich des Schneidabschnitts aus Hartstoff hergestellt ist, wobei als Hartstoff beispielsweise Vollhartmetall, aber auch ein Cermet-Werkstoff Verwendung finden kann.

Je nach Einsatzgebiet des Schaftfräsers, d.h. je nach Zerspanungsproblem, insbesondere je nach zu zerspanendem Werkstoff, kann es von Vorteil sein, den Schaftfräser mit einer innenliegenden Kühl-/Schmiermittelversorgung auszustatten und/oder mit einer geeigneten Beschichtung zu versehen. Als Beschichtungen kommen alle gängigen Hartstoffschichten, aber auch Weichstoff-Beschichtungen in Frage. Diesbezüglich wird beispielsweise auf die Beschichtungen verwiesen, die im Handbuch der Anmelderin "Gühring - Wer bietet mehr? - Ausgabe Deutsch 2006, Preisliste Nr. 40, auf den Seiten 1426 als "A-Schicht oder TiAlN-Schicht", als "Super-A-Schicht", "C-Schicht oder TiCN-Schicht", als "F-Schicht", als "P-Schicht (AlCrN-Schicht)", als "S-Schicht" oder "TiN-Schicht" oder als "M-Schicht auf MoS2-Basis" beschrieben sind.

Nachstehend werden anhand schematischer Zeichnungen mehrere Ausführungsbeispiele der Erfindung näher beschrieben. Es zeigen:

Fig. 1 eine schematische Seitenansicht des Schaftfräsers mit vier Umfangsschneidkanten;

Fig. 1A in vergrößerter Darstellung die Einzelheit "IA" in Fig. 1;

Fig. 2 in vergrößerter Darstellung einen Ausschnitt des erfindungsgemäßen Schruppprofils;

Fig. 3 eine Seitenansicht des Schaftfräsers zur Verdeutlichung der Lage des Querschnitts, an dem die Umfangsschneidkanten in gleichem Winkelabstand zueinander angeordnet sind;

Fig. 4 die Stirnansicht des Werkzeugs gemäß Fig. 3 bei einer Blickrichtung entlang des Pfeils "IV";

Fig. 5 in vergrößerter Darstellung den Schnitt gemäß V-V in Fig. 3;

Fig. 6 eine schematische Abwicklung des Schaftfräsers gemäß Fig. 3;

Fig. 7 eine perspektivische Seitenansicht des erfindungsgemäßen Schaftfräsers;

Fig. 8 die Stirnansicht eines modifizierten nicht zur Erfindung gehörenden Beispiels des Schaftfräsers, bei dem die Gleichteilung an der Stirnseite vorliegt;

Fig. 9 eine Detailansicht einer Umfangsoberfläche eines modifizierten Ausführungsbeispiels des Schaftfräsers;

Fig. 10 eine schematische Skizze zur Darstellung der Spanbildung benachbarter Umfangsschneidkanten; und

Fig. 11 in vergrößerter Darstellung ein modifiziertes Schruppprofil.

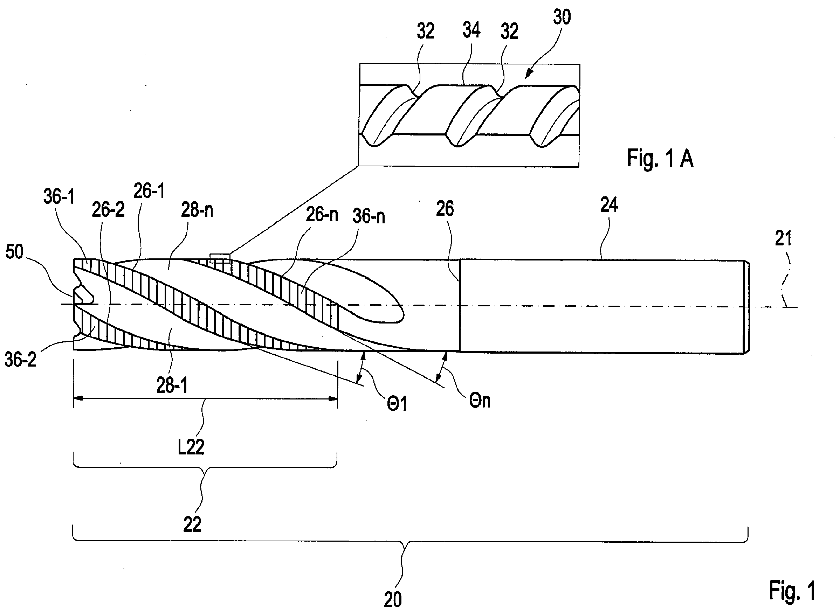

In Fig. 1 ist mit dem Bezugzeichen 20 ein Schaftfräser bezeichnet, der einen Schneidabschnitt 22 und einen Spannschaft 24 hat. Die Fräserachse ist mit 21 bezeichnet. Im gezeigten Beispiel ist sowohl der Schneidabschnitt als auch der Spannschaft zylindrisch ausgebildet. Der Schneidabschnitt kann jedoch gleichermaßen eine andere Einhüllende haben, beispielsweise eine Einhüllende in Form eines Kegelmantels.

Mit der Linie 26 ist angedeutet, dass der Schaftfräser einen so genannten Halseinschliff hat, d.h. der Außendurchmesser des Spannschafts 24 ist geringfügig größer als der Nenndurchmesser des Schneidabschnitts 22.

Der Schneidabschnitt 22 hat eine Mehrzahl von wendelförmig verlaufenden Umfangsschneidkanten 26-1 bis 26-n, zwischen denen Spannuten 28-1 bis 28-n ausgebildet sind. Bei diesem Schaftfräser stellen die Umfangsschneidkanten die Hauptschneiden dar. Stirnseitig ist eine der Anzahl der Umfangsschneidkanten entsprechende Anzahl von Nebenschneiden ausgebildet, und zwar in herkömmlicher Art und Weise, so dass eine nähere Beschreibung dieser Geometrie hier entfallen kann.

Wie sich aus der bzw. im Einzelnen aus der Fig. 1A ergibt, sind die einzelnen Umfangsschneidkanten bei dem gezeigten Ausführungsbeispiel jeweils mit einem abgeflachten Schruppprofil 30 ausgestattet, das von Spanteilernuten 32 und einem dazwischen liegenden abgeflachten Abschnitt 34 gebildet ist. Anstelle des abgeflachten Abschnitts kann auch ein Zentralabschnitt vorliegen, der im Längsschnitt des Fräsers betrachtet einer vorzugsweise leicht konvexen Linie folgt. Die Spanteilernuten 32 erstrecken sich bei dem gezeigten Ausführungsbeispiel über die gesamte Breite der mit 36-1 bis 36-n bezeichneten Fräserstege, und zwar derart, dass die Spanteilernuten von in Umfangsrichtung benachbarten Fräserstegen 26-1 und 26-2 bzw. 26-2 und 26-3 bzw. 26-n und 26-1 axial zueinander versetzt sind, damit die von einer Umfangsschneidkante nicht gefrästen Werkstoffteile von der nächsten Schneidkante abgenommen werden können. Auf diese Weise verdoppelt sich die Spanungsdicke, so dass sich nach dem Zerspanungsgrundgesetz von *Kienzle* und *Victor* dabei die spezifische Schnittkraft verkleinert und das Drehmoment und der Leistungsbedarf kleiner als bei Werkzeugen mit durchgehender Umfangsschneidkante, d.h. bei Schlichtfräsern werden.

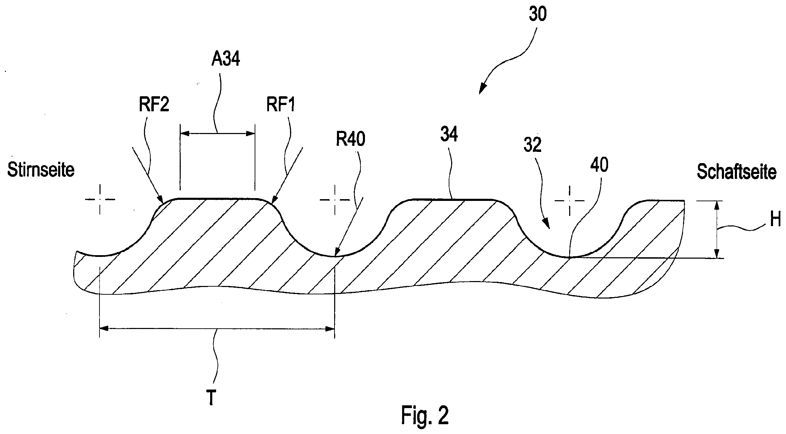

In Fig. 2 ist in stark vergrößertem Maßstab schematisch dargestellt, wie beim erfindungsgemäßen Schaftfräser das Schruppprofil 30 im Einzelnen ausgestattet werden kann. Die einzelnen Spanteilernuten 32 haben einen gerundeten Nutgrund 40 mit einem kleinsten Radius R40. Über einen ersten Flankenradius RF1 geht die Spanteilernut 32 in den abgeflachten Abschnitt 34 über. Der Flankenradius RF1 befindet sich auf der Seite der Spanteilernut 32, die dem Fräserschaft 24 abgewandt ist. Auf der dem Fräserschaft 24 zugewandten Seite geht die jeweilige Spanteilernut 32 über einen zweiten Flankenradius RF2 in den abgeflachten Abschnitt 34 des Schruppprofils über. Die Teilung des Schruppprofils, d.h. der axiale Abstand benachbarter Spanteilernuten 32 einer Umfangsschneidkante ist mit T bezeichnet, und die Tiefe des Schruppprofils 30 mit H.

Die Größen RF1, RF2, T und H, und damit auch das axiale Maß A34 des abgeflachten Abschnitts 34, sind variierbar, um eine Anpassung an die Zerspanungsbedingungen, d.h. an den zu zerspanenden Werkstoff, an die Schnittgeschwindigkeit und an das Zeitspanungsvolumen vorzunehmen. Es hat sich jedoch herausgestellt, dass folgende Bedingungen von besonderem Vorteil sind:

1. Der Flankenradius RF1 und RF2 sollte im Bereich zwischen 0,1 und 1 mm, besonders bevorzugt zwischen 0,1 und 0,5 mm liegen.

2. Die Größe des kleinsten Radius RF40 im Grund 40 der Spanteilernut 32 sollte größer sein als der Flankenradius RF1 bzw. RF2.

3. Der beim Schneiden in Drehrichtung, d.h. in Schnittrichtung vorlaufende Flankenradius RF2 des in der Ausführungsform gemäß Fig. 1 rechtsgedrallten Schaftfräsers, d.h. der dem Fräserschaft jeweils zugewandte Flankenradius RF2 der Spanteilernut, sollte größer sein als der dem Fräserschaft abgewandte Flankenradius RF1. Mit anderen Worten, derjenige Flankenradius, der beim Eintauchen des Schruppprofils in das Werkstück zuerst Schneidarbeit verrichtet, sollte größer an der andere Flankenradius sein.

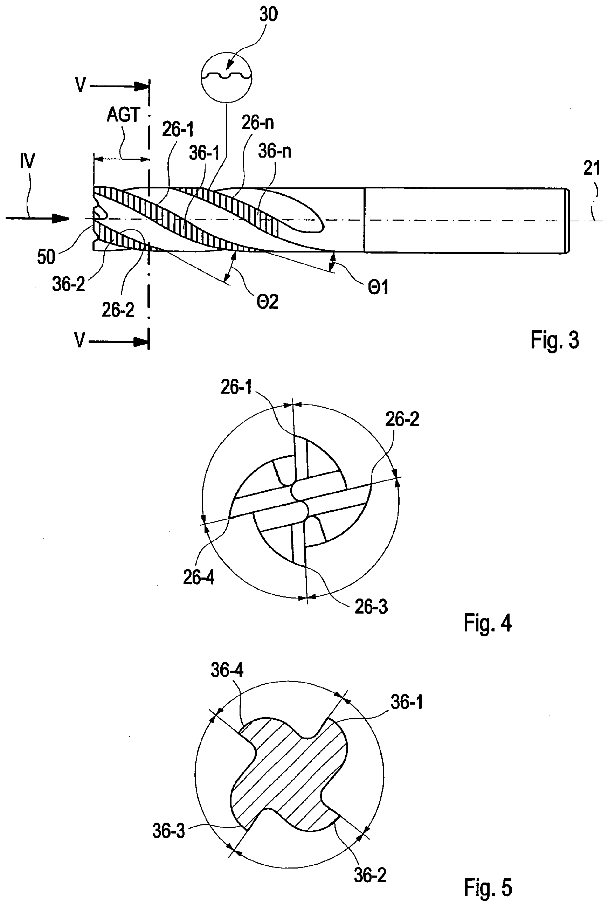

Bei der Ausführungsform des Schaftfräsers, die in den Zeichnungen gezeigt ist, ist eine gerade Anzahl von Umfangsschneidkanten 26-1 bis 26-4 vorgesehen, wobei jeweils zwei einander diametral gegenüberliegende Umfangsschneidkanten 26-1 und 26-3 bzw. 26-2 und 26-4 jeweils denselben Drallwinkel θ haben. Dies ist aus der Fig. 3 am besten ersichtlich. Die Umfangsschneidkante 26-1 am Fräsersteg 36-1 hat beispielsweise einen Drallwinkel θ1, der sich vom Drallwinkel θ2 der benachbarten Umfangsschneidkante 26-2 um 1° bis 6°, vorzugsweise um 1° bis 3° unterscheidet. Der Drallwinkel der Umfangsschneidkante 26-1 entspricht exakt demjenigen der Umfangsschneidkante 26-3, und der Drallwinkel der Umfangsschneidkante 26-2 entspricht exakt demjenigen der Umfangsschneidkante 26-4. Der Drallwinkel θ kann in weiten Grenzen variieren und beispielsweise im Bereich zwischen 20° und über 50° liegen, je nach dem jeweils vorliegenden Zerspanungsproblem.

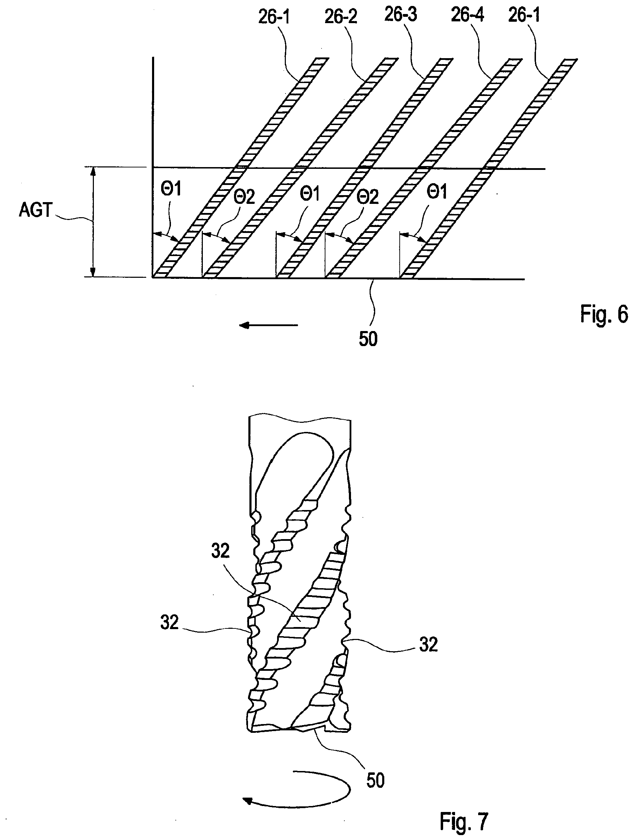

Anhand der Abwicklung gemäß Fig. 6 kann erläutert werden, wie sich aufgrund dieser unterschiedlichen Drallwinkel die Teilung des Schaftfräsers ändert. Es sei angenommen, dass sich in einem vorbestimmten Abstand AGT von der Fräserstirn 50 diejenige Radialebene befindet, in der der Fräser eine gleiche Teilung hat, d.h. in dem der Umfangsabstand der Umfangsschneidkanten voneinander gleich ist. Mit anderen Worten, der jeweilige Zentriwinkel zwischen den benachbarten Umfangsschneidkanten beträgt dort 90°.

Wenn ferner die Drallwinkel einander diametral gegenüberliegender Umfangsschneidkanten 26-1 und 26-3 bzw. 26-2 und 26-4 gleich aber unterschiedlich groß sind, nämlich den Drallwinkel θ1 bzw. θ2 haben, ergibt sich auf der Stirnseite des Schaftfräsers - wie in Fig. 4 gezeigt - eine ungleiche Teilung. Mit anderen Worten, der Zentriwinkel zwischen den benachbarten Umfangsschneidkanten 26-1 und 26-2 bzw. 26-3 und 26-4 ist kleiner als 90°, während der andere Zentriwinkel größer als 90° ist.

Die Ebene des Schnitts V-V in Figur 3 ist also so gelegt, dass ihr axialer Abstand von der Fräserstirn dem Maß AGT entspricht. In allen anderen Schnittebenen senkrecht zur Fräserachse 21 liegt also eine ungleiche Teilung vor.

Es hat sich als vorteilhaft herausgestellt, wenn das Maß AGT etwa 30% der Länge L22 des Schneidabschnitts 22 ausmacht.

In Fig. 7 ist eine perspektivische Ansicht eines im Einsatz erprobten Schaftfräsers dargestellt. Man erkennt in dieser Figur, dass die Spanteilernuten 32 so eingebracht, vorzugsweise eingeschliffen sind, dass sie zu einer auf der Fräserachse 21 senkrechten Ebene des Schaftfräsers leicht angestellt sind. Diese Formgebung kann beispielsweise dadurch realisiert werden, dass zum Einschleifen der Spanteilernuten eine profilierte Schleifscheibe verwendet wird, die ein Profil entsprechend der Einzelheit-Zeichnung gemäß Fig. 2 hat, d.h. eine Außenkontur mit den Radien R40, RF1 und RF2. Diese Schleifscheibe kann unter einen vorbestimmten Winkel zu der auf der Fräserachse 21 senkrechten Ebene des Schaftfräsers angestellt sein, so dass sich die Profilschleifscheibe entlang einer Wendel bewegen kann, deren Ganghöhe der Teilung T des Schruppprofils 30 mit den Spanteilernuten 32 entspricht.

In den weiteren Figuren sind modifizierte Ausführungsformen gezeigt. Dabei sind diejenigen Komponenten, die den Bestandteilen des zuvor beschriebenen Fräsers entsprechen, mit ähnlichen Bezugszeichen versehen, denen aber eine "1", "2" bzw. "3" vorangestellt sind.

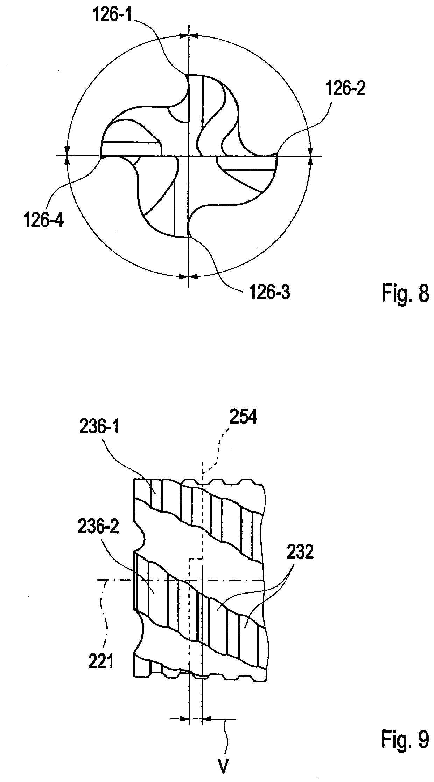

In Fig. 8 ist schematisch die Stirnansicht eines nicht zur Erfindung gehörenden Beispiels des Schaftfräsers angedeutet. Bei diesem Beispiel ist die Anordnung so getroffen, dass an der Fräserstirn eine gleiche Teilung der Umfangsschneidkanten 126-1 bis 126-4 vorliegt. Mit anderen Worten, die Ebene des Schnitts V-V in Fig. 3 liegt bei dieser Variante an der Fräserstirn.

In Fig. 9 ist eine abgewandelte Ausführungsform des Schaftfräsers angedeutet, bei der die mit 232 bezeichneten Spanteilernuten geringfügig anders orientiert sind als bei dem zuvor beschriebenen Ausführungsbeispiel. Wie aus Fig. 9 ersichtlich, verlaufen die Spanteilernuten 232 parallel zu einer Normalebene zur Fräserachse 221. Die gestrichelte Linie 254 deutet an, dass Spanteilernuten von in Umfangsrichtung benachbarten Fräserstegen 236-1 und 236-2 um ein Maß V versetzt sind, wobei gilt:

$$V = T/n,$$

wobei T die Teilung des Schruppprofils (vergleiche Fig. 2) und n die Anzahl der Umfangsschneidkanten 226-1 bis 226-n bedeuten.

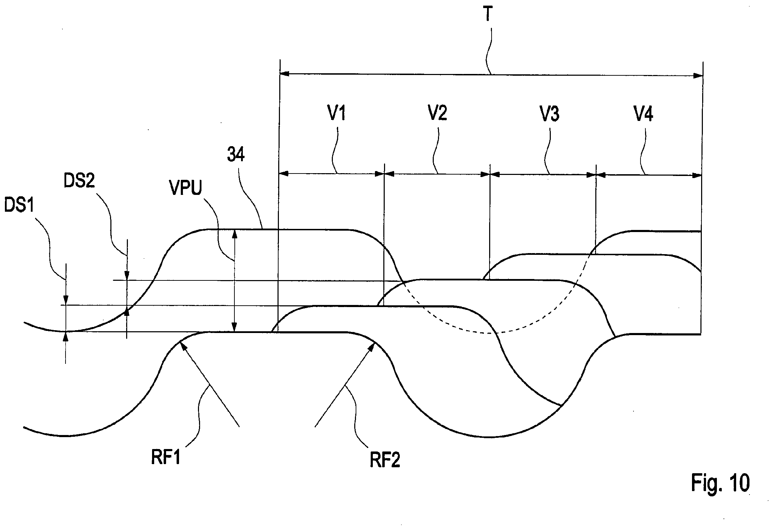

Mit dem vorstehend beschriebenen Aufbau ergibt sich ein Schaftfräser, der sich insbesondere zur Bearbeitung von schwer zerspanbaren Werkstoffen unter Bereitstellung großer Schnittbreiten eignet, d.h. ein Schaftfräser insbesondere zum Flankenfräsen, Nutenfräsen, diagonalem Bohrfräsen oder spiraligem Formfräsen. Anhand der Fig. 10 ist angedeutet, wie bei dem erfindungsgemäßen Schaftfräser die Spanbildung erfolgt. Mit VPU ist der Vorschub pro Umdrehung des Schaftfräsers bezeichnet. Mit T die Teilung des Schruppprofils. Mit V1 bis V4 ist der axiale Versatz der abgeflachten Abschnitte 34 des Schruppprofils benachbarter Umfangsschneidkanten bezeichnet. Die in der jeweiligen Axialebene vorliegende gleichmäßige oder ungleichmäßige Teilung der Umfangsschneidkanten (vergleiche Fig. 6) bestimmt, in welcher Taktfolge die Zähne des betreffenden Schruppprofils der Umfangsschneidkanten nacheinander in Eingriff gelangen und wie sich die Spandicke ändert. So ist beispielsweise das Maß der Spandicke DS1 etwas geringer als das Maß der folgenden Spandicke DS2, wenn der Umfangsabstand der nacheinander in Eingriff gelangenden Umfangsschneidkanten größer ist als der davor liegende Umfangsabstand.

Es ergibt sich aus dieser Darstellung, dass durch diese mehrfachen Unregelmäßigkeiten bei der Spanbildung, die sich über die axiale Länge des Schaftfräsers noch einmal ändern, der Gefahr von eigenschwingungsbedingten Werkzeug-Instabilitäten entgegengewirkt wird. Der erfindungsgemäße Schaftfräser arbeitet deshalb nicht nur mit optimalem Zeitspanungsvolumen, sondern darüber hinaus derart, dass selbst bei großen Schnittbreiten und guter Standzeit eine sehr gute Werkstückoberfläche realisiert werden kann.

Dieser vorteilhafte Effekt kann durch geeignete Materialwahl bei dem Aufbau des Schaftfräsers noch verstärkt werden. Gemäß einer vorteilhaften Weiterbildung besteht der gesamte Schaftfräser aus Hartstoff, insbesondere aus Vollhartmetall, wodurch sich eine verbesserte Steifigkeit und eine noch geringere Anfälligkeit bezüglich Schwingungen ergeben. Durch geeignete Beschichtungen gelingt es, die Standzeit des Schaftfräsers zusätzlich zu optimieren.

Vorzugsweise wird die Geometrie des Schruppprofils, insbesondere das Verhältnis von Teilung zur axialen Länge des abgeflachten Abschnitts und/oder das Verhältnis von Teilung zur Tiefe der Spanteilernut in Abhängigkeit von den physikalischen Eigenschaften des zu zerspanenden Werkstoffs ausgewählt.

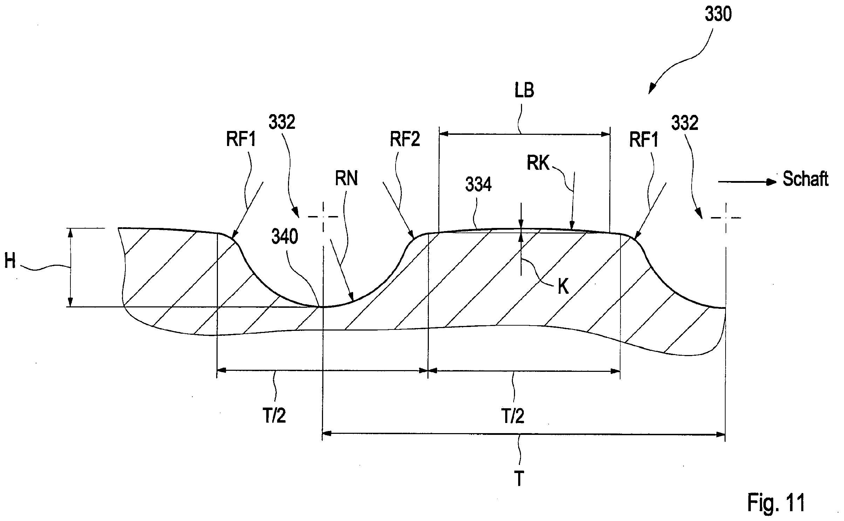

Bei allen zuvor beschriebenen Ausführungsformen ist das Schruppprofil mit einem vollkommen abgeflachten Zentralabschnitt 34 ausgestattet. Diese Geometrie ist jedoch nicht unbedingt erforderlich, um die erfindungsgemäßen Vorteile in maßgeblichen Umfang zu erzielen. Der Zentralabschnitt kann auch gerundet sein, vorzugsweise leicht ausgebaucht bzw. konvex, was nachfolgend anhand der Figur 11 näher erläutert werden soll.

Auch bei diesem Schruppprofil 330 haben die einzelnen Spanteilernuten 332 einen gerundeten Nutgrund 340 mit einem kleinsten Nutenradius RN. Über einen ersten Flankenradius RF1 geht die Spanteilernut 332 in einen leicht konvexen, aber immer noch im Wesentlichen abgeflachten Zentralabschnitt 334 über. Der Flankenradius RF1 befindet sich auf der Seite der Spanteilernut 332, die dem Fräserschaft abgewandt ist. Auf der dem Fräserschaft zugewandten Seite geht die jeweilige Spanteilernut 332 über einen zweiten Flankenradius RF2 in den Zentralabschnitt 334 des Schruppprofils über. Die Teilung des Schruppprofils, d.h. der axiale Abstand benachbarter Spanteilernuten 332 einer Umfangsschneidkante ist wieder mit T bezeichnet, und die Tiefe des Schruppprofils 30 mit H.

Die Größen RF1, RF2, T und H, und damit auch das axiale Maß LB des im Wesentlichen abgeflachten, aber konvexen Abschnitts 334, sind wieder variierbar, um eine Anpassung an die Zerspanungsbedingungen, d.h. an den zu zerspanenden Werkstoff, an die Schnittgeschwindigkeit und an das Zeitspanungsvolumen vorzunehmen. Auch bei dieser Ausführungsform soll gelten:

1. Der Flankenradius RF1 und RF2 sollte im Bereich zwischen 0,1 und 1 mm liegen;

2. Die Größe des kleinsten Radius RN im Grund 340 der Spanteilernut 332 sollte größer sein als der Flankenradius RF1 bzw. RF2.

3. Der beim Schneiden in Drehrichtung, d.h. in Schnittrichtung vorlaufende Flankenradius RF2 des in der Ausführungsform gemäß Fig. 1 rechtsgedrallten Schaftfräsers, d.h. der dem Fräserschaft jeweils zugewandte Flankenradius RF2 der Spanteilernut, sollte größer sein als der dem Fräserschaft abgewandte Flankenradius RF1. Mit anderen Worten, derjenige Flankenradius, der beim Eintauchen des Schruppprofils in das Werkstück zuerst Schneidarbeit verrichtet, sollte größer als der andere Flankenradius sein.

Bei dem Ausführungsbeispiel der Figur 11 kann die Kontur des Schruppprofils durch vier Kreislinienabschnitte gebildet werden. An den Abschnitt mit RF1 schließt sich der Abschnitt mit RN an, an diesen der Abschnitt mit RF2 und an diesen der Abschnitt mit dem Radius RK, der im Bereich der Größe des Nutenradius RN aber auch wesentlich, vorzugsweise um ein Vielfaches größer als dieser sein kann. Der Zentralabschnitt 334 kann auch - abweichend von einer Kreislinie - von einer anderen gekrümmten Kurve gebildet sein.

Vorzugsweise ist die Balligkeit K des Profils im Bereich des Zentralabschnitts 334 gering. Vorzugsweise gilt unter Bezug auf die Figur 11:

$$K{:}LB \leq 0{,}05.$$

wobei das Maß LB die Profillänge zwischen den Flankenradien RF1 und RF2 bezeichnet.

Selbstverständlich sind Abweichungen von dem beschriebenen Ausführungsbeispiel möglich, ohne den Grundgedanken der Erfindung zu verlassen.

So kann beispielsweise das Schneidteil mit anderen, herkömmlichen Schneidengeometrien ausgeführt werden.

Es ist auch möglich, das Werkzeug mit einer innenliegenden Kühl-/Schmiermittelversorgung auszustatten.

Anstelle von einstückig mit dem Schaftfräserwerkstoff ausgebildeten Schneidkanten können auch Schneideinsätze verwendet werden.

Es ist darüber hinaus möglich, die Stirngeometrie des Fräsers in weiten Grenzen zu ändern. Die Schneidteile können rechteckig, mit Eckenfase oder mit Kugelkopf ausgebildet werden.

Auch das Schruppprofil in den einzelnen Umfangsschneidkanten kann ungleich geteilt sein, also unregelmäßig über die axiale Länge. Es ist auch möglich, den Querschnitt der Spanteilernuten in Umfangsrichtung zu verändern.

Schließlich kann auf den verschiedenen Fräserstegen ein unterschiedliches Profil ausgebildet sein. Es ist auch möglich, einzelne Umfangsschneidkanten bzw. diametrale Schneidenpaare der Umfangsschneiden auszusetzen. Mit anderen Worten: Es kann z.B. eine Abwandlung derart getroffen sein, dass bei 4 Umfangsschneidkanten die Schneiden 1 und 3 mit einem Schruppprofil ausgestattet sind, während die Schneiden 2 und 4 glattschneidig sind.

**Patentansprüche**

1. Schaftfräser, der im Bereich seines Schneidabschnitts (22) eine Mehrzahl von wendelförmig verlaufenden Umfangsschneidkanten (26-1 bis 26-n) hat, von denen zumindest eine maßgebliche Anzahl jeweils mit einem im Wesentlichen abgeflachten Schruppprofil (30, 330) mit im Grund (40, 340) abgerundeten Spanteilernuten (32; 332) derart ausgestattet sind, dass die Spanteilernuten in Umfangsrichtung benachbarter Fräserstege (36-1, 36-2, 36-3, 36-4) axial zueinander versetzt sind, wobei die Spanteilernuten (32, 332) jeweils über einen vorbestimmten Flankenradius (RF1, RF2) in einen im Wesentlichen abgeflachten Zentralabschnitt (34; 334) des Schruppprofils (30) übergehen, **dadurch gekennzeichnet, dass**

     zumindest eine Umfangsschneidkante (26-1) einen Drallwinkel (Θ1) hat, der sich von dem Drallwinkel (Θ2) einer anderen Umfangsschneidkante (26-2) unterscheidet, wobei die Drallwinkel (Θ1, Θ2) benachbarter Umfangsschneidkanten (26-1, 26-2) unterschiedlich sind und eine gerade Anzahl von Umfangsschneidkanten (26-1 bis 26-4) vorgesehen ist, von denen jeweils zwei einander diametral gegenüber liegen und denselben Drallwinkel (Θ1 und Θ3 bzw. Θ2 und Θ4) haben, und

     sich die Drallwinkel (Θ) der Umfangsschneidkanten (26) um 1° bis 6°, vorzugsweise um 1 bis 3° unterscheiden, wobei

     die Teilung des Fräsers in einer im Bereich des Schneidabschnitts (22) in einem vorbestimmten Abstand AGT von der Fräserstirn und senkrecht zur Fräserachse (21) liegenden Radialebene (V-V) gleich ist.

2. Schaftfräser nach Anspruch 1, **dadurch gekennzeichnet, dass** der Flankenradius (RF1, RF2) im Bereich zwischen 0,1 bis 1,0 mm liegt.

3. Schaftfräser nach Anspruche 1 oder 2, **dadurch gekennzeichnet, dass** der dem Fräserschaft jeweils abgewandte Flankenradius (RF1) kleiner ist als der andere Flankenradius (RF2) der Spanteilernut (32).

4. Schaftfräser nach einem der Ansprüche 1 bis 3, **dadurch gekennzeichnet, dass** die Spanteilernuten (32) zu einer auf einer Längsachse (21) des Schaftfräsers senkrecht stehenden Ebene des Schaftfräsers (20) angestellt sind.

5. Schaftfräser nach Anspruch 4, **dadurch gekennzeichnet, dass** die Spanteilernuten (32) jeweils abschnittsweise dem Verlauf einer Wendel folgen, deren Ganghöhe der Teilung (T) des mit den Spanteilernut (32) ausgebildeten Schruppprofils (30) entspricht.

6. Schaftfräser nach einem der Ansprüche 1 bis 3, **da-**

**durch gekennzeichnet, dass** die Spanteilernuten (232) zu einer auf einer Längsachse (221) des Schaftfräsers senkrecht stehenden Ebene des Schaftfräsers (220) parallel sind.

7. Schaftfräser nach Anspruch 6, **dadurch gekennzeichnet, dass** die Spanteilernuten (232) in Umfangsrichtung benachbarter Fräserstege (236-1, 236-2) axial zueinander um das Maß V versetzt sind, wobei gilt:

$$V = T/n$$

und T die Teilung des von den Spanteilernuten (232) gebildeten Schruppprofils und n die Anzahl der Umfangsschneidkanten bedeuten.

8. Schaftfräser nach einem der Ansprüche 1 bis 7, **dadurch gekennzeichnet, dass** der Flankenradius (RF1, Rf2) kleiner ist als der kleinste Radius (R40; RN) im Grund (40; 340) der abgerundeten Spanteilernuten (32; 332).

9. Schaftfräser nach einem der Ansprüche 1 bis 8, **dadurch gekennzeichnet, dass** die Drallwinkel (Θ) zwischen 20 und 55° liegen.

10. Schaftfräser nach einem der Ansprüche 1 bis 9, **dadurch gekennzeichnet, dass** er zumindest im Bereich des Schneidabschnitts (22) aus Hartstoff, insbesondere Vollhartmetall (VHM) besteht.

11. Schaftfräser nach einem der Ansprüche 1 bis 10, **dadurch gekennzeichnet, dass** er zumindest im Bereich des Schneidabschnitts (22) mit einer Beschichtung, insbesondere einer PVD-Beschichtung versehen ist.

12. Schaftfräser nach einem der Ansprüche 1 bis 11, **dadurch gekennzeichnet, dass** die Geometrie des Schruppprofils (30), insbesondere das Verhältnis von Teilung (T) zur axialen Länge (A34) des vorzugsweise im Wesentlichen abgeflachten Zentralabschnitts (34; LB) und/oder das Verhältnis von Teilung (T) zur Tiefe (H) der Spanteilernut (32; 332) in Abhängigkeit von den physikalischen Eigenschaften des zu zerspanenden Werkstoffs gewählt wird.

13. Schaftfräser nach einem der Ansprüche 1 bis 12, **dadurch gekennzeichnet, dass** das Schruppprofil in allen eine Längsachse (21; 221) des Schaftfräsers enthaltenden Schnittebenen im Wesentlichen identisch ist.

14. Schaftfräser nach einem der Ansprüche 1 bis 13, **dadurch gekennzeichnet, dass** der zwischen den Spanteilernuten (332) liegende Zentralabschnitt (334) eine konvex gekrümmte Oberfläche hat.

15. Schaftfräser nach Anspruch 14, **dadurch gekennzeichnet, dass** der Krümmungsradius (RK) des Zentralabschnitts (334) wesentlich größer ist als der Flankenradius (RF1, RF2).

16. Verwendung eines Schaftfräsers nach einem der Ansprüche 1 bis 15 für die Zerspanung mit großen Schnittbreiten, insbesondere zum Flankenfräsen, Nutenfräsen, diagonalen Bohr-Fräsen oder spiraligen Formfräsen

## Claims

1. An end mill cutter which has in the region of its cutting portion (22) a plurality of peripheral cutting edges (26-1 to 26-n) running in a helical shape, of which at least a decisive number are each equipped with a substantially flattened roughing profile (30, 330) with chip-separating grooves (32; 332) which are rounded in the base (40, 340), in such a manner that the chip-separating grooves of cutter ridges (36-1, 36-2, 36-3, 36-4) that are adjacent in the peripheral direction are axially offset from one another, the chip-separating grooves (32, 332) each merging via a predefined flank radius (RF1, RF2) into a substantially flattened central portion (34; 334) of the roughing profile (30), **characterised**

    **in that**
    at least one peripheral cutting edge (26-1) has an angle of twist ($\Theta$ 1) which differs from the angle of twist ($\Theta$ 2) of another peripheral cutting edge (26-2), wherein
    the angles of twist ($\Theta$ 1 , $\Theta$ 2) of adjacent peripheral cutting edges (26-1 , 26-2) are different and an even number of peripheral cutting edges (26-1 to 26-4) is provided, of which in each case two lie diametrically opposite each other and have the same angle of twist ($\Theta$ 1 and $\Theta$ 3, and $\Theta$ 2 and $\Theta$ 4), and
    the angles of twist ($\Theta$) of the peripheral cutting edges (26) differ by from 1° to 6° , preferably by from 1° to 3° , wherein
    the pitch of the cutter is equal in a radial plane (V-V) lying in the region of the cutting portion (22) at a predetermined distance AGT from the cutter front and perpendicular to the cutter axis 21.

2. An end mill cutter according to claim 1, **characterised in that** the flank radius (RF1, RF2) lies in the range from 0.1 to 1.0 mm.

3. An end mill cutter according to claim 1 or 2, **characterised in that** the flank radius (RF1) that is remote from the cutter shank in each case is smaller than the other flank radius (RF2) of the chip-separating groove (32).

4. An end mill cutter according to any one of claims 1 to 3, **characterised in that** the chip-separating grooves (32) are angled towards a plane of the end mill cutter '(20), which plane is perpendicular to a longitudinal axis (21) of the end mill cutter.

5. An end mill cutter according to claim 4, **characterised in that** the chip-separating grooves (32) in each case follow in portions the course of a helix the lead of which corresponds to the pitch (T) of the roughing profile (30) formed with the chip-separating groove (32).

6. An end mill cutter according to any one of claims 1 to 3, **characterised in that** the chip-separating grooves (232) are parallel to a plane of the end mill cutter (220), which plane is perpendicular to a longitudinal axis (221) of the end mill cutter.

7. An end mill cutter according to claim 6, **characterised in that** the chip-separating grooves (232) of cutter ridges (236-1 , 236-2) that are adjacent in the peripheral direction are axially offset from one another by the quantity V, where:

$$V = T/n$$

and T represents the pitch of the roughing profile formed by the chip-separating grooves (232) and n represents the number of peripheral cutting edges.

8. An end mill cutter according to any one of claims 1 to 7, **characterised in that** the flank radius (RF1, Rf2) is smaller than the smallest radius (R40; RN) in the base (40; 340) of the rounded chip-separating grooves (32; 332).

9. An end mill cutter according to any one of claims 1 to 8, **characterised in that** the angles of twist ($\Theta$) are between 20 and 55°.

10. An end mill cutter according to any one of claims 1 to 9, **characterised in that** it consists of a hard material, especially solid carbide (SC), at least in the region of the cutting portion (22).

11. An end mill cutter according to any one of claims 1 to 10, **characterised in that** it is provided with a coating, especially a PVD coating, at least in the region of the cutting portion (22).

12. An end mill cutter according to any one of claims 1 to 11, **characterised in that** the geometry of the roughing profile (30), especially the ratio of pitch (T) to axial length (A34) of the preferably substantially flattened central portion (34; LB) and/or the ratio of pitch (T) to depth (H) of the chip-separating groove (32; 332) is selected in dependence on the physical properties of the material to be machined.

13. An end mill cutter according to any one of claims 1 to 12, **characterised in that** the roughing profile is substantially identical in all the sectional planes containing a longitudinal axis (21; 221) of the end mill cutter.

14. An end mill cutter according to any one of claims 1 to 13, **characterised in that** the central portion (334) lying between the chip-separating grooves (332) has a convexly curved surface.

15. An end mill cutter according to claim 14, **characterised in that** the radius of curvature (RK) of the central portion (334) is considerably greater than the flank radius (RF1, RF2).

16. Use of an end mill cutter according to any one of claims 1 to 15 for machining with large cutting widths, especially for side milling, slot milling, diagonal drilling and milling, or spiral form milling.

**Revendications**

1. Fraise à queue qui présente, dans la zone de section de coupe (22), une pluralité d'arêtes de coupe périphérique (26-1 à 26-n) s'étendant en hélice, dont au moins un nombre prédéterminant est équipé respectivement d'un profilé de dégrossissage (30, 330) sensiblement aplati avec des rainures de séparation de copeaux (32 ; 332) arrondies dans le fond (40, 340) de telle manière que les rainures de séparation de copeaux soient axialement décalées les unes par rapport aux autres dans le sens périphérique de nervures de fraise contigües (36-1, 36-2, 36-3, 36-4), les rainures de séparation de copeaux (32, 332) passant respectivement par un rayon de flanc prédéterminé (RF1, RF2) dans une section centrale (34 ; 334) sensiblement aplatie du profilé de dégrossissage (30), **caractérisée en ce que**

au moins une arête de coupe périphérique (26-1) présente un angle d'hélice (Θ1) qui se distingue de l'angle d'hélice (02) d'une autre arête de coupe périphérique (26-2), les angles d'hélice (Θ1, 02) d'arêtes de coupe périphérique (26-1, 26-2) contigües étant différents et un nombre pair d'arêtes de coupe périphérique (26-1 à 26-4) étant prévu, dont respectivement deux sont diamétralement opposées et présentent le même angle d'hélice (Θ1 et Θ3 ou Θ2 et Θ4), et
les angles d'hélice (Θ) des arêtes de coupe périphérique (26) se distinguant d'1 à 6°, de préférence d'1 à 3°,
le pas de la fraise étant identique dans un plan radial (V-V) se trouvant dans la zone de la section de coupe (22) à une distance AGT prédéterminée de la face de fraise et perpendiculairement à l'axe de fraise (21).

2. Fraise à queue selon la revendication 1, **caractérisée en ce que** le rayon de flanc (RF1, RF2) est compris dans la plage entre 0,1 et 1,0 mm.

3. Fraise à queue selon la revendication 1 ou 2, **caractérisée en ce que** le rayon de flanc (RF1) éloigné respectivement de la queue de fraise est inférieur à l'autre rayon de flanc (RF2) de la rainure de séparation de copeaux (32).

4. Fraise à queue selon l'une quelconque des revendications 1 à 3, **caractérisée en ce que** les rainures de séparation de copeaux (32) sont serrées pour obtenir un plan de la fraise à queue (20) perpendiculaire à un axe longitudinal (21) de la fraise à queue.

5. Fraise à queue selon la revendication 4, **caractérisée en ce que** les rainures de séparation de copeaux (32) suivent respectivement par sections le tracé d'une hélice, dont la hauteur de pas correspond au pas (T) du profilé de dégrossissage (30) réalisé avec la rainure de séparation de copeaux (32).

6. Fraise à queue selon l'une quelconque des revendications 1 à 3, **caractérisée en ce que** les rainures de séparation de copeaux (232) sont parallèles à un plan de la fraise à queue (220) perpendiculaire à un axe longitudinal (221) de la fraise à queue.

7. Fraise à queue selon la revendication 6, **caractérisée en ce que** les rainures de séparation de copeaux (232) sont axialement décalées les unes par rapport aux autres de la mesure V dans le sens périphérique de nervures de fraise contiguës (236-1, 236-2), la formule suivante s'appliquant :

$$V = T/n$$

et T étant le pas du profilé de dégrossissage formé par les rainures de séparation de copeaux (232) et n le nombre d'arêtes de coupe périphérique.

8. Fraise à queue selon l'une quelconque des revendications 1 à 7, **caractérisée en ce que** le rayon de flanc (RF1, Rf2) est inférieur au rayon le plus petit (R40 ; RN) dans le fond (40 ; 340) des rainures de séparation de copeaux arrondies (32 ; 332).

**9.** Fraise à queue selon l'une quelconque des revendications 1 à 8, **caractérisée en ce que** les angles d'hélice ($\Theta$) sont compris entre 20 et 55°.

**10.** Fraise à queue selon l'une quelconque des revendications 1 à 9, **caractérisée en ce qu'**elle se compose, au moins dans la zone de la section de coupe (22), de matière dure, en particulier de métal complètement dur (VHM).

**11.** Fraise à queue selon l'une quelconque des revendications 1 à 10, **caractérisée en ce qu'**elle est pourvue, au moins dans la zone de la section de coupe (22), d'un revêtement, en particulier d'un revêtement PVD.

**12.** Fraise à queue selon l'une quelconque des revendications 1 à 11, **caractérisée en ce que** la géométrie du profilé de dégrossissage (30), en particulier le rapport entre le pas (T) et la longueur axiale (A34) de la section centrale (34 ; LB) de préférence sensiblement aplatie et/ou le rapport entre le pas (T) et la profondeur (H) de la rainure de séparation de copeaux (32 ; 332) est choisi en fonction des propriétés physiques du matériau à usiner.

**13.** Fraise à queue selon l'une quelconque des revendications 1 à 12, **caractérisée en ce que** le profilé de dégrossissage est sensiblement identique dans tous les plans de coupe contenant un axe longitudinal (21 ; 221) de la fraise à queue.

**14.** Fraise à queue selon l'une quelconque des revendications 1 à 13, **caractérisée en ce que** la section centrale (334) se trouvant entre les rainures de séparation de copeaux (332) présente une surface courbée de manière convexe.

**15.** Fraise à queue selon la revendication 14, **caractérisée en ce que** le rayon de courbure (RK) de la section centrale (334) est sensiblement plus grand que le rayon de flanc (RF1, RF2).

**16.** Utilisation d'une fraise à queue selon l'une quelconque des revendications 1 à 15 pour l'usinage avec des grandes largeurs de coupe, en particulier pour le fraisage de flanc, de rainure, le fraisage-forage diagonal ou le fraisage-profilage en spirale

Fig. 1 A

Fig. 1

Schaftseite

H

30

40

32

34

R40

RF1

A34

RF2

Stirnseite

T

Fig. 2

Fig. 3

Fig. 4

Fig. 5

26-1   26-2   26-3   26-4   26-1

AGT

Θ1   Θ2   Θ1   Θ2   Θ1

50

Fig. 6

32

32

32

50

Fig. 7

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4770567 A

- DE 3706282 C2

**In der Beschreibung aufgeführte Nicht-Patentliteratur**

- Handbuch der Anmelderin "Gühring - Wer bietet mehr?. 2006, 1426